# EUROPÄISCHE PATENTSCHRIFT

(11) **EP 3 830 443 B1**
(45) Veröffentlichungstag und Bekanntmachung des Hinweises auf die Patenterteilung: **02.07.2025**
(21) Anmeldenummer: 19742012.8
(22) Anmeldetag: 15.07.2019
(51) Int. Cl.: F16D 65/00, F16D 65/092, B61H 5/00, F16D 55/224, F16D 69/04

(54) **WERKZEUG ZUR BETÄTIGUNG EINES EINEN BREMSBELAG AN EINEM BELAGHALTER ARRETIERENDEN VERSCHLUSSRIEGELS**
TOOL FOR OPERATING A LATCH LOCKING A BRAKE PAD TO A PAD HOLDER
OUTIL D'ACTIONNEMENT D'UN VERROU BLOQUANT UNE PLAQUETTE DE FREIN SUR UN PORTE-PLAQUETTE

(30) Priorität: 31.07.2018 DE 102018118514
(43) Veröffentlichungstag der Anmeldung: 09.06.2021
(73) Patentinhaber: KNORR-BREMSE Systeme für Schienenfahrzeuge GmbH, 80809 München (DE)
(72) Erfinder: MÜLLEK, Ferenc, 8000 Szekesfehervar (HU)
(86) Internationale Anmeldenummer: PCT/EP2019/069023
(87) Internationale Veröffentlichungsnummer: WO 2020/025306

(56) Entgegenhaltungen:
- EP-A1- 2 587 086
- EP-B1- 2 587 086
- DE-A1- 2 841 139
- DE-C2- 2 841 139
- JP-A- 2008 002 573
- JP-A- 2011 236 924
- JP-B2- 5 247 332
- US-A- 3 851 738

## Beschreibung

Die Erfindung betrifft ein Werkzeug zum Lösen und Arretieren eines Verschlussriegels einer Bremsbelaghalterung, mit dem ein Bremsbelag an einem Belaghalter arretierbar ist.

Bremsbeläge für Scheibenbremsen von Schienenfahrzeugen sind üblicherweise über einen rückseitig am Bremsbelag vorgesehenen Führungssteg in einem Führungskanal eines Belaghalters gehalten, der sich in Längsrichtung des Belaghalters erstreckt.

Dieser Führungskanal ist dabei im Querschnitt mit einem Hinterschnitt versehen, insbesondere schwalbenschwanzförmig ausgebildet, in dem der daran angepasste Führungssteg einliegt. In Funktionsstellung ist zur Arretierung des Bremsbelags in Längsrichtung des Belaghalters ein Verschlussriegel schwenkbar an dem Belaghalter gehalten, der in einer Verriegelungsstellung in diesen Führungskanal vorsteht und in einer Freigabestellung aus dem Führungskanal entfernt ist. Dies ermöglicht eine einfache Handhabung bei einem Bremsbelagwechsel.

Eine gattungsgemäße Bremsbelaghalterung ist beispielsweise aus der DE 10 2009 006 290 A1 bekannt.

Zur Festlegung des Verschlussriegels in seiner Verriegelungsstellung dient hier ein Bügel, der im Bereich eines einer Schwenkachse des Verschlussriegels entfernten Endes mit dem Bügel gekoppelt ist. Der Bügel ist dabei einerseits am Belaghalter und andererseits am Verschlussriegel als Federbügel ausgebildet so vorgespannt, dass er den Verschlussriegel in die Verriegelungsstellung drückt.

Um einen Bremsbelagwechsel vornehmen zu können, muss hier eine Nockenwelle mit einem daran verdrehsicher gehaltenen Exzenter eine Nase des Verschlussriegels wegdrücken und so den Verschlussriegel in die Freigabestellung verschwenken.

Alternativ kann auch der Bügel mithilfe eines Werkzeugs von außen so gekippt werden, dass der Verschlussriegel in die Freigabestellung gedrückt wird. Eine solche Bremsbelaghalterung hat sich in der Praxis an sich bewährt.

Eine weitere gattungsgemäße Bremsbelaghalterung ist aus der JP 2008 002573 A bekannt. Bei dieser Bremsbelaghalterung kann ein Werkzeug in Gestalt eines einfachen Stabes durch eine Bohrung in einem aus dem Belaghalter vorstehenden Steg hindurch bis in eine dazu vorgesehene Werkzeugaufnahme des Verschlussriegels eingesteckt werden, so dass durch eine Hebel- oder Kippbewegung des an einem Innenrand der Bohrung aufliegenden Stabes der Verschlussriegel aus der Verriegelungsstellung in die Freigabestellung bewegt wird. Ein beabsichtigtes oder unbeabsichtigtes Entfernen des Stabes aus der Werkzeugaufnahme des Verschlussriegels ist dabei jederzeit möglich. Zum technologischen Hintergrund werden ferner die DE 28 41 139 A1, die US 3 851 738 A, die JP 5 247332 B2, die EP 2 587 086 A1 und die JP 2011 236924 A benannt.

Aufgabe der vorliegenden Erfindung ist es, ein Werkzeug zum Lösen und Arretieren eines Verschlussriegels einer Bremsbelaghalterung derart weiterzuentwickeln, dass das Lösen und Arretieren noch einfacher und sicherer durchführbar ist.

Weitere Aufgabe der vorliegenden Erfindung ist es, eine Bremsbelaghalterung für einen Schienenfahrzeug und ein Werkzeug zum Verschwenken eines Verschlussriegels dahingehend weiterzuentwickeln, dass der Bremsbelagwechsel in noch einfacherer und sicherer Weise durchgeführt werden kann.

Die erste Aufgabe wird durch ein Werkzeug zum Lösen und Arretieren eines Verschlussriegels einer Bremsbelaghalterung mit den Merkmalen des Anspruchs 1 gelöst.

Die zweite Aufgabe wird durch eine Bremsbelaghalterung für ein Schienenfahrzeug und ein Werkzeug zum Verschwenken eines Verschlussriegels mit den Merkmalen des Anspruchs 4 gelöst.

Bei der erfindungsgemäßen Kombination aus Bremsbelaghalterung und Werkzeug weist die Bremsbelaghalterung für ein Schienenfahrzeug einen Belaghalter auf sowie einen an dem Belaghalter arretiert gehaltenen Bremsbelag. Der Belaghalter weist einen sich in Längsrichtung des Belaghalters erstreckenden Führungskanal auf, in dem der Bremsbelag verschiebbar gehalten ist.

Zur Arretierung des Bremsbelags in Längsrichtung des Belaghalters ist an dem Belaghalter ein Verschlussriegel schwenkbar gehalten, der in einer den Bremsbelag in einer Funktionsstellung fixierenden Verriegelungsstellung in den Führungskanal vorsteht und in einer Freigabestellung aus dem Führungskanal entfernt ist.

An einem einer Schwenkachse des Verschlussriegels entfernten Ende des Verschlussriegels ist ein Bügel angeordnet, der schwenkbar am Belaghalter gelagert ist und mit dem der Verschlussriegel zwischen der Verriegelungsstellung und der Freigabestellung verschwenkbar ist.

Die Bremsbelaghalterung weist des Weiteren ein Werkzeug zur Verschwenkung des Verschlussriegels auf, wobei der Verschlussriegel eine Werkzeugöffnung aufweist, in die das Werkzeug zur Verschwenkung des Verschlussriegels einführbar ist.

Das Werkzeug weist einen Hebelgriff, einen in die Werkzeugöffnung einführbaren Betätigungszapfen, ein entlang einer Kontur des Belaghalters führbares Führungselement und eine in den Belaghalter einsetzbare, zwischen dem Betätigungszapfen und dem Führungselement angeordnete Schwenkachse auf.

Das Führungselement ist relativ zum Betätigungszapfen derart positioniert, dass das Werkzeug nur in einer Verriegelungsstellung des Verschlussriegels von dem Belaghalter lösbar ist.

Mit einer derart ausgebildeten Bremsbelaghalterung und einem derart ausgebildeten Werkzeug ist ein Bremsbelagwechsel in einfacher, ergonomischer und sicherer Weise ermöglicht.

Insbesondere ist sichergestellt, dass das Werkzeug nur bei verriegeltem Verschlussriegel von dem Belaghalter abgenommen werden kann.

Darüber hinaus muss das Werkzeug in der Freigabestellung des Verschlussriegels nicht festgehalten werden, so dass die den Bremsbelagwechsel durchführende Person beide Hände frei hat, um den auszutauschenden Bremsbelag gegebenenfalls abzunehmen bzw. den einzubauenden Bremsbelag in den Führungskanal einzuschieben.

Das am Belaghalter gehaltene Werkzeug dient darüber hinaus als Visualisierung eines noch nicht abgeschlossenen Bremsbelagwechsels, da das Werkzeug nur in der Verriegelungsstellung des Verschlussriegels von dem Belaghalter lösbar ist.

Vorteilhafte Ausführungsvarianten der Erfindung sind Gegenstand der Unteransprüche.

Gemäß einer vorteilhaften Ausführungsvariante ist das Führungselement als Führungszapfen mit einem Halsstück und einem Kopfstück ausgebildet, wobei das Halsstück parallel zur Schwenkachse am Hebelgriff des Werkzeugs angeordnet ist.

Gemäß einer weiteren vorteilhaften Ausführungsvariante weist der Betätigungszapfen ein Halsstück und ein Kopfstück auf, wobei das Kopfstück des Betätigungszapfens und die Werkzeugöffnung derart geformt sind, dass das Kopfstück nur in der Ausrichtung der Werkzeugöffnung, bei der der Verschlussriegel in der Verriegelungsstellung ist, in die Werkzeugöffnung einführbar ist.

Der Betätigungszapfen erfüllt so zwei Aufgaben gleichzeitig, nämlich zum einen die Verschwenkung des Verschlussriegels bei Betätigung des Hebelgriffes und zum zweiten, dass das Werkzeug nur in dieser Verriegelungsstellung einsetzbar bzw. abnehmbar ist und so wirksam verhindert wird, dass der Verschlussriegel in der Freigabestellung verbleibt, was zu einem Herausfallen des Bremsbelags führen kann.

Um zu verhindern, dass der Bügel beispielsweise durch einen Steinschlag aus der den Verschlussriegel in der Verriegelungsstellung haltenden Position herausgeschwenkt wird und dabei den Verschlussriegel in die Freigabeposition verschwenkt, ist der Bügel gemäß einer weiteren bevorzugten Ausführungsvariante auf einer dem Bremsbelag abgewandten Seite des Belaghalters derart angeordnet, dass ein als Arretierstück ausgebildetes Ende eines zweiten Schenkels des Bügels aus dem Verschlussriegel in Richtung des Belaghalterendes vorsteht und ein freies Ende des ersten Schenkels in einer Bohrung eines Lagers des Belaghalters aufgenommen ist, während die verbleibenden Teile des ersten Schenkels, des zweiten Schenkels und ein diese miteinander verbindendes Verbindungsstück auf einer dem Bremshebel zugewandten Seite des Verschlussriegel angeordnet sind.

Nach einer weiteren Ausführungsvariante der Erfindung ist das der Schwenkachse entfernte Ende des Verschlussriegels in der Verriegelungsstellung in einem Schlitz eines Lagers des Belaghalters aufgenommen.

Dadurch ist der Verschlussriegel zuverlässig gegen ein Verkippen in der Verriegelungsstellung gesichert.

Nach einer weiteren bevorzugten Ausführungsvariante ist die Kontur, entlang der das Führungselement führbar ist, an der der Andruckplatte abgewandten Seite des Lagers angeformt.

Gemäß einer weiteren vorteilhaften Ausführungsvariante steht das Kopfstück des Führungselements nach Verschwenken des Verschlussriegels aus der Verriegelungsstellung in Richtung der Freigabestellung in den Schlitz des Lagers des Belaghalters vor.

Dadurch ist zum einen auch ein Verkippen des Hebelgriffs des Werkzeugs bei Betätigung des Werkzeugs wirksam verhindert. Außerdem wird dadurch zusammen mit der Arretierung des Kopfstückes des Betätigungszapfens in der Werkzeugöffnung des Verschlussriegels ein Verklemmen der Schwenkachse des Werkzeugs in der Achsenaufnahme des Lagers verhindert.

Nachfolgend werden bevorzugte Ausführungsbeispiele der Erfindung anhand der beiliegenden Zeichnungen näher erläutert.

Es zeigen:
- Fig. 1: eine perspektivische Ansicht einer Ausführungsvariante einer erfindungsgemäßen Bremsbelaghalterung mit an einem Belaghalter festgelegten Bremsbelag,
- Fig. 2: eine Ausschnittsvergrößerung eines den Verschlussriegel aufweisenden Teils des Belaghalters der in Fig. 1 gezeigten Bremsbelaghalterung,
- Fig. 3: eine der Fig. 2 entsprechende perspektivische Ansicht des Bremsbelaghalterungsausschnitts mit am Belaghalter angesetztem Werkzeug in der Verriegelungsstellung des Verschlussriegels,
- Fig. 4: eine schematische perspektivische Ansicht einer Ausführungsvariante eines Werkzeugs der Bremsbelaghalterung,
- Fig. 5 und 6: eine perspektivische Detailansicht des in Fig. 2 dargestellten Ausschnitts der Bremsbelaghalterung mit angesetztem Werkzeug in der Verriegelungsstellung des Verschlussriegels,
- Fig. 7 und 8: den Fig. 5 und 6 entsprechende Darstellungen in der Freigabestellung des Verschlussriegels und
- Fig. 9 bis 11: Seitenansichten auf den Belaghalter mit angesetztem Werkzeug in der Verriegelungsstellung, eine Zwischenstellung zwischen der Verriegelungsstellung und der Freigabestellung und der Freigabestellung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbelaghalterung, der Belaghalter, des Bremsbelags, des Werkzeugs, des Hebelgriffs, des Verschlussriegels und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern

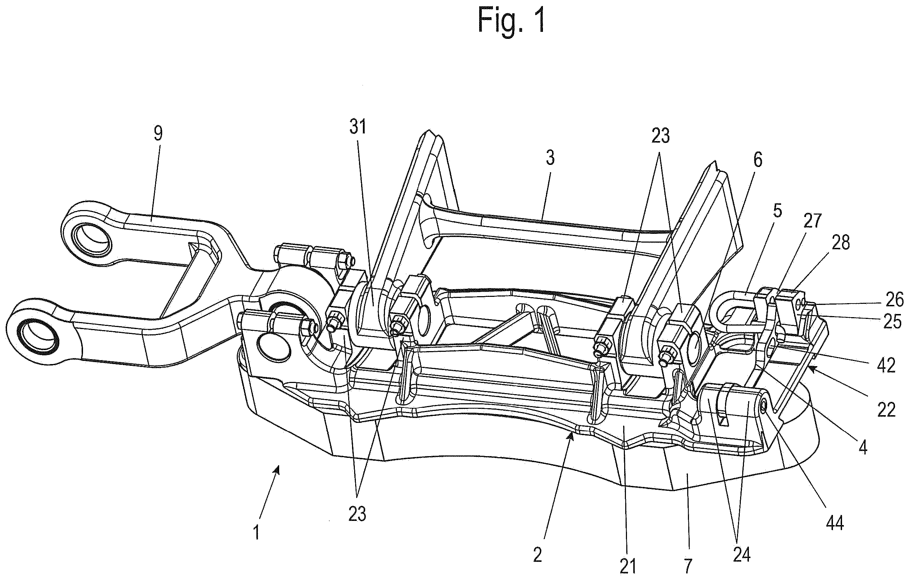

**Fig. 1** zeigt eine Ausführungsvariante einer erfindungsgemäßen Bremsbelaghalterung in der Darstellung eines an einem Belaghalter 2 der Bremsbelaghalterung angesetzten Werkzeugs 8.

Der Belaghalter 2 weist im Wesentlichen eine Andruckplatte 21 auf, auf deren Oberseite Bremshebellager 23 zur Lagerung eines Bremshebels 3 angeformt sind.

Die Bremshebellager 23 sind hier als geschlitzte Lagerböcke ausgeführt, die zentral eine Lagerachse 6 aufnehmen, die durch Augen 31 des Bremshebels 3 geführt sind, der so um eine sich in Längsrichtung des Belaghalters 2 erstreckende Achse schwenkbar am Belaghalter 2 gelagert ist.

Im Bereich eines in Richtung der Längsache des Belaghalters 2 betrachteten Endes ist eine Hängelasche 9 schwenkbar gelagert.

Auf dem der Hängelasche 9 gegenüberliegenden Ende des Belaghalters 2 ist ein Verschlussriegel 4 schwenkbar am Belaghalter 2 gehalten.

Ein Bremsbelag 7 ist in einem Führungskanal 22 des Belaghalters 2 verschiebbar gehalten. Der Führungskanal 22 ist dabei auf der dem Bremshebel 3 abgewandten Unterseite der Andruckplatte 21 des Belaghalters 2 angeformt.

Der Bremsbelag 7 weist dementsprechend einen (nicht dargestellten) Führungssteg auf, der in der bevorzugt im Querschnitt schwalbenschwanzförmig ausgebildeten Führungskanal 22 eingeschoben ist.

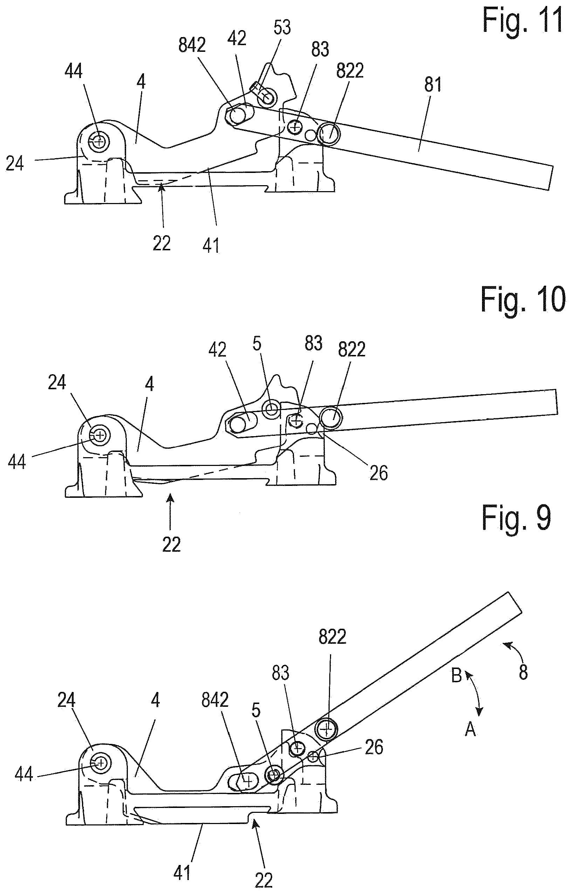

Wie in den **Figuren 9 bis 11** erkennbar ist, ist eine der Kanten des Verschlussriegels 4 als Sperrleiste 41 ausgebildet, die durch eine schlitzartige Ausnehmung in der Andruckplatte 21 des Belaghalters 2 in den Führungskanal 22 vorsteht.

Diese Position wird nachfolgend auch als Verriegelungsstellung des Verschlussriegels 4 bezeichnet.

Als Freigabestellung des Verschlussriegels 4 wird eine Position bezeichnet, bei der die Sperrleiste 41 aus der schlitzartigen Ausnehmung in der Andruckplatte 21 des Belaghalters 2 heraus geschwenkt ist.

In dieser Verriegelungsstellung wird der Bremsbelag 7 dadurch, dass er mit seinem Führungssteg in den Führungskanal 22 vorsteht, an einer Verschiebebewegung entlang des Führungskanals 22 gehindert und ist dadurch in seiner Funktionsstellung am Belaghalter 2 fest gehalten.

Der Verschlussriegel 4 ist zur Durchführung einer Verschwenkbewegung mit einem Ende an einem am Belaghalter 2 angeordneten, insbesondere angeformten Drehlager 24 gehalten. In dem Drehlager 24 ist eine Schwenkachse 44 des Verschlussriegels 4 durchgeführt, so dass der Verschlussriegel 4 um eine sich im Wesentlichen in Richtung der Längserstreckung des Belaghalters 2 erstreckenden Schwenkachse 44 verschwenkbar am Belaghalter 2 gehalten ist.

Auf einem der Schwenkachse 44 des Verschlussriegels 4 entfernten Bereich des Verschlussriegels 4 ist ein Bügel 5 angeordnet, der schwenkbar am Belaghalter 2 gelagert ist.

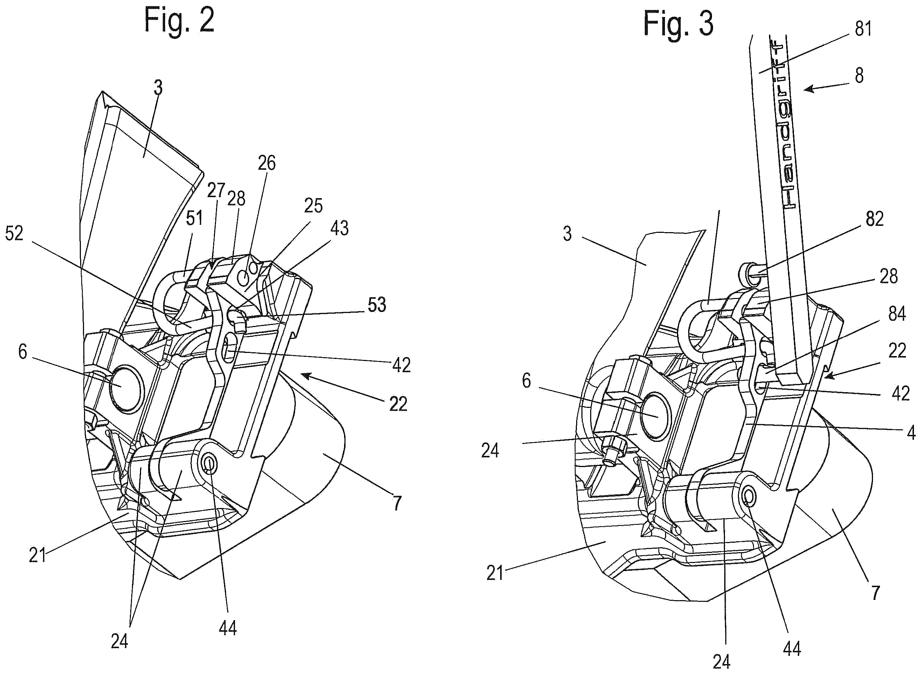

Der Bügel 5 dient dazu, die Verschwenkbewegung des Verschlussriegels 4 auf einen Schwenkbereich zwischen der Verriegelungsstellung und der Freigabestellung des Verschlussriegels 4 zu beschränken. Dazu ist der Bügel 5 mit einem ersten Schenkel 51, wie in den **Figuren 2 und 3** dargestellt ist, in einem Lager 25 des Belaghalters 2 um eine zur Schwenkachse 44 des Verschlussriegels 4 parallele Achse schwenkbar gelagert.

Ein zweiter Schenkel 52 des Bügels 5 ist mit seinem als Arretierstück 53 ausgebildeten freien Ende durch eine als Bohrung ausgeführte Bügelaufnahme 43 des Verschlussriegels 4 geführt.

Der Bügel 5 ist insgesamt etwa u-förmig geformt und vorzugsweise aus einem Federstahl gefertigt, der in der Verriegelungsstellung unter Vorspannung stehend den Verschlussriegel 4 in die Verriegelungsstellung drückt.

Um ein unbeabsichtigtes Verschwenken des Bügels 5 zu verhindern, beispielsweise in Folge eines Steinschlags, ist der Bügel 5 auf einer dem Bremsbelag 7 abgewandten Seite der Andruckplatte 21 des Belaghalters 2 derart angeordnet, dass das Arretierstück 53 aus dem Verschlussriegel 4 in Richtung des unteren Belaghalterendes (an dem der Verschlussriegel 4 angeordnet ist) vorsteht, während die verbleibenden Teile des ersten Schenkels 51, des zweiten Schenkels 52 und ein diese miteinander verbindendes, bevorzugt bogenförmiges Verbindungsstück auf einer dem Bremshebel zugewandten Seite des Verschlussriegel 4 angeordnet sind. Durch diese Anordnung ist der Bügel 5 durch den oberen Teil des Verschlussriegels 4, der aus der dem Bremsbelag 7 abgewandten Seite der Andruckplatte 21 des Belaghalters 2 vorsteht, vor aus einem Kiesbett einer Schiene aufgewirbelten Steinen abgeschirmt.

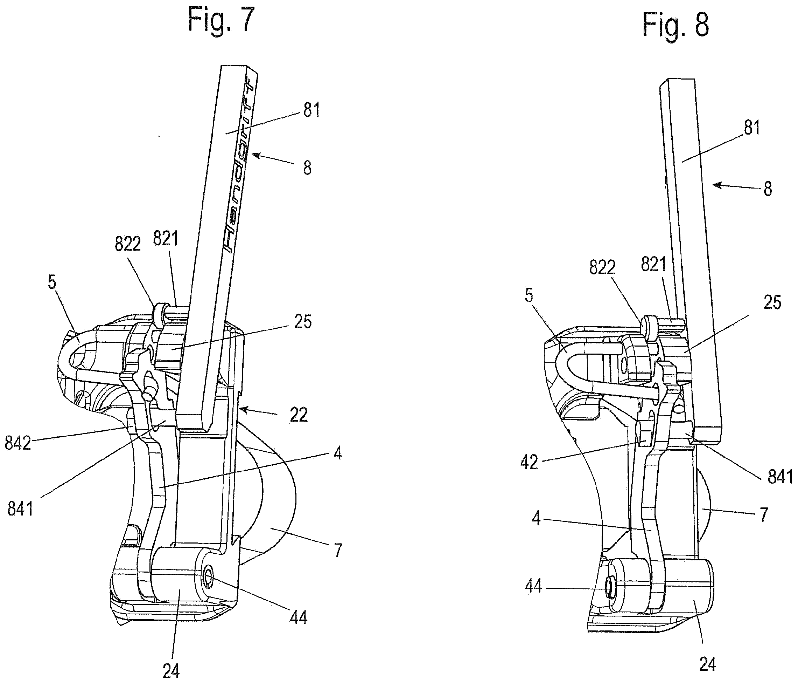

In der Freigabestellung des Verschlussriegels 4, wie sie beispielsweise in den **Fig. 7 und 8** gezeigt ist, ist der Bügel 5 entspannt und hält den Verschlussriegel 4 so in der Freigabestellung.

Zur Vornahme eines Wechsels des Bremsbelags 7 ist es notwendig, den Verschlussriegel 4 aus seiner Verriegelungsstellung in die Freigabestellung zu verschwenken. Dazu wird ein Werkzeug 8 eingesetzt, das der Verschwenkung des Verschlussriegels 4 dient.

Der Verschlussriegel 4 weist eine Werkzeugöffnung 42 auf, in die das Werkzeug 8 zur Verschwenkung des Verschlussriegels 4 einführbar ist.

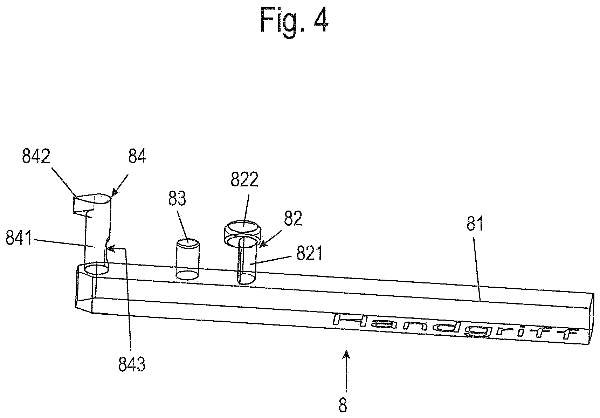

Das in einer Einzeldarstellung in **Fig. 4** gezeigte Werkzeug 8 weist einen Hebelgriff 81 auf, einen in die Werkzeugöffnung 42 einführbaren Betätigungszapfen 84, ein entlang einer Kontur 28 des Belaghalters 2 führbares Führungselement 82 sowie eine in den Belaghalter 2 einsetzbare, zwischen dem Betätigungszapfen 84 und dem Führungselement 82 angeordnete Schwenkachse 83.

Befindet sich der Verschlussriegel 4 in seiner Verriegelungsstellung, kann das Werkzeug 8 am Verschlussriegel 4 und dem Lager 25 des Belaghalters 2 angesetzt werden.

Dabei wird zum einen die Schwenkachse 83 in eine dafür vorgesehene Achsenaufnahme 26 des Lagers 25 eingesetzt. Gleichzeitig wird der Betätigungszapfen 84 in die Werkzeugöffnung 42 eingeführt.

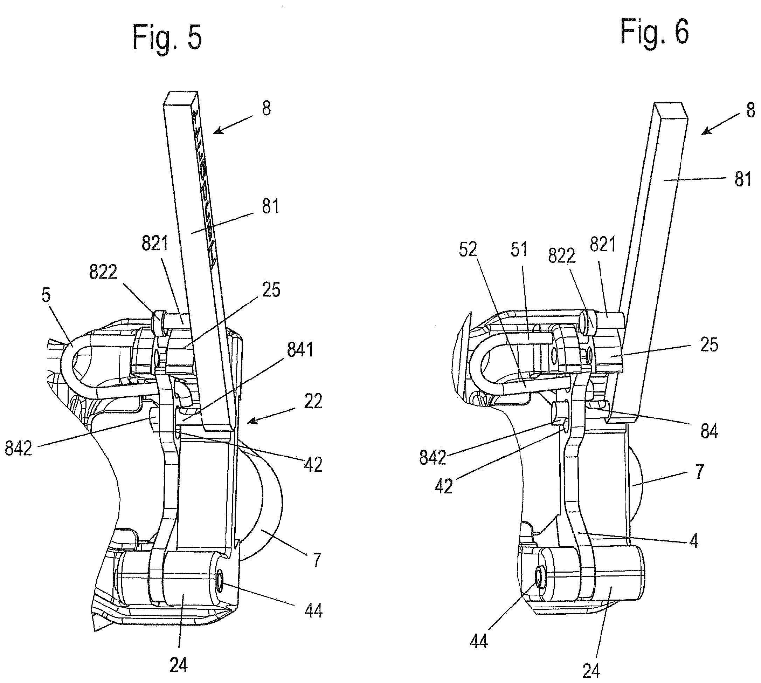

Die Einführung des Betätigungszapfens 84 in die Werkzeugöffnung 42 ist nur in der Verriegelungsstellung des Verschlussriegels 4 möglich. Dazu ist, wie in den **Fig. 3** - **6** gezeigt, ein Kopfstück 842 des Betätigungszapfens 84 mit einer Formgestalt ausgebildet, die ein Einführen des Kopfstücks 842 in die Werkzeugöffnung 42 des Verschlussriegels 4 nur in einer vorbestimmten Winkelstellung ermöglicht.

Die Werkzeugöffnung 42 ist hier als Langloch ausgebildet, während das Kopfstück 842 des Betätigungszapfens 84 hier derart geformt ist, dass es in der vorbestimmten Winkelstellung durch die Werkzeugöffnung 42 einführbar ist, jedoch bei Verschwenkung des Werkzeugs 8 und damit einer Verschwenkung des Kopfstücks 842 des Betätigungszapfens 84 nach Durchführen durch die Werkzeugöffnung 42 die Werkzeugöffnung 42 umrandende Wandung hintergreift. Dadurch wird ein Herausziehen des Kopfstücks 842 durch die Werkzeugöffnung 42 in der in den Fig. 7 und 8 dargestellten Freigabestellung des Verschlussriegels 4 verhindert.

Auch das Führungselement 82 weist ein Halsstück 821 und ein Kopfstück 822 auf.

Das Halsstück 821 dient dabei als Führungszapfen, der sich parallel zur Schwenkachse 83 am Hebelgriff 81 des Werkzeugs 8 erstreckt. Dieses Halsstück 821 ist dabei entlang der Kontur 28 des Belaghalters 2 führbar. Die Kontur 28 ist in der hier gezeigten bevorzugten Ausführungsvariante an der dem Bremsbelag 7 abgewandten Seite des Lagers 25 angeformt.

Die Kontur 28 des Lagers 25 ist derart geformt, dass das Kopfstück 822 des Führungselements 82 in der Verriegelungsstellung des Verschlussriegels 4 deutlich über der Kontur 28 steht, um ein Einführen der Schwenkachse 83 des Werkzeuges 8 in die Achsaufnahme 26 im Lager 25 zu ermöglichen.

Nach Verschwenken des Werkzeuges 8 in eine Entriegelungsrichtung A, bei der der Verschlussriegel 4 in Richtung der Freigabestellung bewegt wird, kommt das Kopfstück 822 des Führungselements 82 sukzessiv in einer Position hinter der Kontur 28 des Lagers 25 und verhindert damit ein Bewegung des Kopfstücks 822 parallel zu Schwenkachse 83 des Werkzeugs 8 und damit ein Entfernen des Werkzeugs vom Belaghalter 2.

Wie in den Fig. 1-3 und 5-8 des Weiteren dargestellt ist, ist das der Schwenkachse 44 entfernte Ende des Verschlussriegels 4 in der Verriegelungsstellung in einem Schlitz 27 des Lagers 25 des Belaghalters 2 aufgenommen, wodurch der Verschlussriegel 4 gegen ein Abkippen infolge einer Verschiebung des Bremsbelags 7 entlang der Längsache des Belaghalters 2 gesichert ist.

Das Kopfstück 822 des Führungselements 82 steht bei angesetztem Werkzeug 8 nach Verschwenken des Verschlussriegels 4 in Richtung der Freigabestellung in den Schlitz 27 des Lagers 25 des Belaghalters 2 vor und gewährleistet damit eine korrekt ausgeführte Schwenkbewegung des Hebelgriffs 81 des Werkzeugs 8.

Die Schwenkbewegung des Werkzeugs 8 zur Freigabe des Bremsbelags 7 aus seiner durch den Verschlussriegel 4 verriegelten Stellung am Belaghalter 2 ist in den Fig. 9, 10 und 11 dargestellt.

Fig. 9 zeigt dabei die Verriegelungsstellung, bei der die Sperrleiste 41 des Verschlussriegels 4 in den Führungskanal 22 des Belaghalters 2 vorsteht.

Das Werkzeug 8 ist hier am Belaghalter 2 angesetzt. Dabei ist die Schwenkachse 83 in der Achsenaufnahme 29 des Belaghalters 2 aufgenommen. Der Betätigungszapfen 84 ist in die Werkzeugöffnung 42 eingeführt. Das Führungselement 82 befindet sich in dieser Position oberhalb der Kontur 28 des Lagers 25 des Belaghalters 2.

Fig. 10 zeigt eine Zwischenstellung des Werkzeugs 8 und des Verschlussriegels 4 zwischen der Verriegelungsstellung und der Freigabestellung.

Hier ist die Sperrleiste 41 teilweise aus dem Führungskanal 22 heraus geschwenkt. Das Kopfstück 842 des Betätigungszapfens 84 hintergreift bereits teilweise die rückseitige, die Werkzeugöffnung 42 umgebende Wandung des Verschlussriegels 4, so dass das Werkzeug 8 in dieser Stellung nicht mehr von dem Belaghalter 2 abgenommen werden kann. Das Führungselement 82 ist auf die Kontur 28 des Lagers 25 aufgesetzt.

Fig. 11 zeigt schließlich die Freigabestellung des Verschlussriegels 4, bei der die Sperrleiste 41 den Führungskanal 22 vollständig freigibt, so dass ein in dem Führungskanal 22 geführter Bremsbelag 7 aus dem Belaghalter 2 herausgeschoben werden kann bzw. herausrutschen kann.

Da das Werkzeug in der Freigabestellung des Verschlussriegels 4 nicht abgenommen werden kann, ist dadurch ermöglicht, dass die den Belagwechsel durchführende Person das Werkzeug 8 loslassen kann und so beide Hände frei hat, um insbesondere den neuen Bremsbelag in den Belaghalter 2 einschieben zu können.

Um nach dem Einsetzen eines neuen Bremsbelags 7 in den Belaghalter 2 das Werkzeug 8 wieder entfernen zu können, wird das Werkzeug in eine der Entriegelungsrichtung A entgegengesetzten Verriegelungsrichtung B verschwenkt.

Dabei wird der Verschlussriegel 4 zur Sicherung des Bremsbelags 7 gegen Herausrutschen aus dem Führungskanal 22 mit seiner Sperrleiste 41 zurück in die schlitzartige Ausnehmung in der Andruckplatte 21 des Belaghalters 2 hinein geschwenkt.

Dabei gelangt das Kopfstück 822 des Führungselements 82 sukzessiv in einer Position oberhalb der Kontur 28 des Lagers 25. Ebenso gelangt Kopfstück 842 des Betätigungszapfens 84 bei dieser Schwenkbewegung zurück in eine Stellung, bei der es in Richtung parallel zur Schwenkachse 83 des Werkzeugs 8 aus der Werkzeugöffnung 42 herausbewegbar ist, so dass das Werkzeug 8 nach Erreichen der Verriegelungsstellung des Verschlussriegels 4 vom Belaghalter 2 in der Richtung parallel zur Schwenkachse 83 des Werkzeugs 8 abgenommen werden kann.

### BEZUGSZEICHENLISTE

- 2: Belaghalter
- 21: Andruckplatte
- 22: Führungskanal
- 23: Bremshebellager
- 24: Drehlager
- 25: Lager
- 26: Achsenaufnahme
- 27: Schlitz
- 28: Kontur

- 3: Bremshebel

- 4: Verschlussriegel
- 41: Sperrleiste
- 42: Werkzeugöffnung
- 43: Bügelaufnahme
- 44: Schwenkachse

- 5: Bügel
- 51: erster Schenkel
- 52: zweiter Schenkel
- 53: Arretierstück

- 6: Lagerachse
- 7: Bremsbelag

- 8: Werkzeug
- 81: Hebelgriff
- 82: Führungselement
- 821: Halsstück
- 822: Kopfstück
- 83: Schwenkachse
- 84: Betätigungszapfen
- 841: Halsstück
- 842: Kopfstück

- 9: Hängelasche

- A: Entriegelungsrichtung
- B: Verriegelungsrichtung

## Patentansprüche

1. Werkzeug (8) zur Betätigung eines einen Bremsbelag (7) an einem Belaghalter (2) arretierenden Verschlussriegels (4) einer Bremsbelaghalterung für ein Schienenfahrzeug, aufweisend
einen Hebelgriff (81),
einen am Hebelgriff (81) angeordneten, in eine Werkzeugöffnung (42) des Verschlussriegels (4) einführbaren Betätigungszapfen (84),
**dadurch gekennzeichnet, dass**
am Hebelgriff (81) ein Führungselement (82) und eine zwischen dem Betätigungszapfen (84) und dem Führungselement (82) angeordnete Schwenkachse (83) angeordnet ist,
wobei das Führungselement (82) entlang einer Kontur (28) des Belaghalters (2) führbar ist und
wobei das Führungselement (82) relativ zum Betätigungszapfen (84) derart positioniert ist, dass das Werkzeug (8) nur in einer Verriegelungsstellung des Verschlussriegels (4) von dem Belaghalter (2) lösbar ist.

2. Werkzeug (8) nach Anspruch 1,
**dadurch gekennzeichnet, dass**
das Führungselement (82) als Führungszapfen mit einem Halsstück (821) und einem Kopfstück (822) ausgebildet ist, wobei das Halsstück (821) parallel zur Schwenkachse (83) des Werkzeugs (8) am Hebelgriff (81) des Werkzeugs (8) angeordnet ist.

3. Werkzeug (8) nach Anspruch 1 oder 2,
**dadurch gekennzeichnet, dass**
der Betätigungszapfen (84) ein Halsstück (841) und ein Kopfstück (842) aufweist, wobei das Kopfstück (842) des Betätigungszapfens (84) und die Werkzeugöffnung (42) derart geformt sind, dass das Kopfstück (842) nur in der Ausrichtung der Werkzeugöffnung (42), bei der der Verschlussriegel (4) in der Verriegelungsstellung ist, in die Werkzeugöffnung (42) einführbar ist.

4. Bremsbelaghalterung für ein Schienenfahrzeug und Werkzeug (8) zur Verschwenkung eines Verschlussriegels (4), wobei die Bremsbelaghalterung einen Belaghalter (2) und einen an dem Belaghalter (2) arretiert gehaltenen Bremsbelag (7) aufweist,
wobei der Belaghalter (2) eine Andruckplatte (21) mit einem sich in Längsrichtung des Belaghalters (2) erstreckenden Führungskanal (22) aufweist, in dem der Bremsbelag (7) verschiebbar gehalten ist,
wobei zur Arretierung des Bremsbelags (7) in Längsrichtung des Belaghalters (2) der Verschlussriegel (4) schwenkbar an dem Belaghalter (2) gehalten ist,
wobei der Verschlussriegel (4) in einer den Bremsbelag (7) in einer Funktionsstellung fixierenden Verriegelungsstellung in den Führungskanal (22) vorsteht und in einer Freigabestellung aus dem Führungskanal (22) entfernt ist,
wobei an einem einer Schwenkachse (44) des Verschlussriegels (4) entfernten Ende des Verschlussriegels (4) ein Bügel (5) angeordnet ist, der schwenkbar am Belaghalter (2) gelagert ist und mit dem der Verschlussriegel (4) zwischen der Verriegelungsstellung und der Freigabestellung verschwenkbar ist,
wobei der Verschlussriegel (4) eine Werkzeugöffnung (42) aufweist, in die das Werkzeug (8) zur Verschwenkung des Verschlussriegels (4) einführbar ist,
**dadurch gekennzeichnet, dass**
das Werkzeug (8) gemäß einem der vorstehenden Ansprüche ausgebildet ist, wobei die Schwenkachse (83) des Werkzeugs (8) in den Belaghalter (2) einsetzbar ist.

5. Bremsbelaghalterung und Werkzeug (8) nach Anspruch 4,
**dadurch gekennzeichnet, dass**
der Bügel (5) auf einer dem Führungskanal (22) abgewandten Seite der Andruckplatte (21) derart angeordnet ist, dass ein als Arretierstück (53) ausgebildetes Ende eines zweiten Schenkels (52) des Bügels (5) aus dem Verschlussriegel (4) in Richtung eines Belaghalterendes vorsteht und ein freies Ende eines ersten Schenkels (51) in einer Bohrung eines Lagers (25) des Belaghalters (2) aufgenommen ist, während die verbleibenden Teile des ersten Schenkels (51), des zweiten Schenkels (52) und ein diese miteinander verbindendes Verbindungsstück auf einer einem Bremshebel (3) zugewandten Seite des Verschlussriegel (4) angeordnet sind.

6. Bremsbelaghalterung und Werkzeug (8) nach Anspruch 4 oder 5,
**dadurch gekennzeichnet, dass**
das der Schwenkachse (44) des Verschlussriegels (4) entfernte Ende des Verschlussriegels (4) in der Verriegelungsstellung in einem Schlitz (27) eines Lagers (25) des Belaghalters (2) aufgenommen ist.

7. Bremsbelaghalterung und Werkzeug (8) nach einem der Ansprüche 4 bis 6, **dadurch gekennzeichnet, dass**
die Kontur (28), entlang der das Führungselement (82) führbar ist, an einer der Andruckplatte (21) abgewandten Seite des Lagers (25) angeformt ist.

8. Bremsbelaghalterung und Werkzeug (8) nach Anspruch 4, wobei das Werkzeug (8) gemäß Anspruch 2 ausgebildet ist,
**dadurch gekennzeichnet, dass**
das Kopfstück (822) des Führungselements (82) nach Verschwenken des Verschlussriegels (4) aus der Verriegelungsstellung in Richtung der Freigabestellung in den Schlitz (27) des Lagers (25) des Belaghalters (2) vorsteht.

## Claims

1. Tool (8) for actuating a locking latch (4) locking a brake lining (7) at a lining holder (2) of a brake lining holder for a rail vehicle, having
a lever handle (81),
an actuating journal (84) which is arranged at the lever handle (81) and is insertable into a tool opening (42) of the locking latch (4),
**characterized in that**
a guide element (82) and a pivot axis (83) arranged between the actuating journal (84) and the guide element (82) are arranged at the lever handle (81),
wherein the guide element (82) is guidable along a contour (28) of the lining holder (2) and
wherein the guide element (82) is positioned in relation to the actuating journal (84) such that the tool (8) can only be detached from the lining holder (2) in a locking position of the locking latch (4).

2. Tool (8) according to claim 1,
**characterized in that**
the guide element (82) is designed as a guide journal with a neck piece (821) and a head piece (822), wherein the neck piece (821) is arranged parallel to the pivot axis (83) of the tool (8) at the lever handle (81) of the tool (8).

3. Tool (8) according to claim 1 or 2,
**characterized in that**
the actuating journal (84) has a neck piece (841) and a head piece (842), wherein the head piece (842) of the actuating journal (84) and the tool opening (42) are shaped such that the head piece (842) can only be inserted into the tool opening (42) in the alignment of the tool opening (42) in which the locking latch (4) is in the locking position.

4. Brake lining holder for a rail vehicle and tool (8) for pivoting a locking latch (4), wherein the brake lining holder has a lining holder (2) and a brake lining (7) held in a locked manner at the lining holder (2),
wherein the lining holder (2) has a pressure plate (21) with a guiding duct (22) extending in the longitudinal direction of the lining holder (2), in which guiding duct the brake lining (7) is movably held,
wherein, in order to lock the brake lining (7) in the longitudinal direction of the lining holder (2), the locking latch (4) is pivotably held at the lining holder (2), wherein the locking latch (4) protrudes into the guiding duct (22) in a locking position fixing the brake lining (7) in a functional position and is removed from the guiding duct (22) in a release position,
wherein, at an end of the locking latch (4) remote from a pivot axis (44) of the locking latch (4), a bracket (5) is arranged which is pivotably mounted on the lining holder (2) and allows the locking latch (4) to be pivoted between the locking position and the release position,
wherein the locking latch (4) has a tool opening (42) into which the tool (8) for pivoting the locking latch (4) can be inserted,
**characterized in that**
the tool (8) is designed according to any one of the preceding claims, wherein the pivot axis (83) of the tool (8) can be inserted into the lining holder (2).

5. Brake lining holder and tool (8) according to claim 4,
**characterized in that**
the bracket (5) is arranged on a side of the pressure plate (21) facing away from the guiding duct (22) such that an end of a second limb (52) of the bracket (5) designed as a locking piece (53) protrudes out of the locking latch (4) in the direction of an end of the lining holder and a free end of a first limb (51) is accommodated in a bore hole of a bearing (25) of the lining holder (2), while the remaining portions of the first limb (51), of the second limb (52), and a connection piece connecting these to each other are arranged on a side of the locking latch (4) facing a brake lever (3).

6. Brake lining holder and tool (8) according to claim 4 or 5,
**characterized in that**
the end of the locking latch (4) remote from the pivot axis (44) is accommodated in a slot (27) of a bearing (25) of the lining holder (2) in the locking position.

7. Brake lining holder and tool (8) according to any one of claims 4 to 6,
**characterized in that**
the contour (28), along which the guide element (82) is guidable, is integrally formed on a side of the bearing (25) facing away from the pressure plate (21).

8. Brake lining holder and tool (8) according to claim 4, wherein the tool (8) is designed according to claim 2,
**characterized in that**
the head piece (822) of the guide element (82) protrudes into the slot (27) of the bearing (25) of the lining holder (2) after the locking latch (4) has pivoted out of the locking position in the direction of the release position.

## Revendications

1. Outil (8) pour l'actionnement d'un verrou de fermeture (4) bloquant une garniture de frein (7) au niveau d'un support de garniture (2) d'une fixation de garniture de frein pour un véhicule ferroviaire, présentant
une poignée à levier (81),
un tourillon d'actionnement (84) disposé au niveau de la poignée à levier (81), pouvant être introduit dans une ouverture d'outil (42) du verrou de fermeture (4),
**caractérisé en ce que**
un élément de guidage (82) et un axe de pivotement (83) disposé entre le tourillon d'actionnement (84) et l'élément de guidage (82) sont disposés au niveau de la poignée à levier (81),
dans lequel l'élément de guidage (82) peut être guidé le long d'un contour (28) du support de garniture (2) et
dans lequel l'élément de guidage (82) est positionné par rapport au tourillon d'actionnement (84) de telle manière que l'outil (8) puisse être détaché du support de garniture (2) seulement dans une position de verrouillage du verrou de fermeture (4).

2. Outil (8) selon la revendication 1,
**caractérisé en ce que**
l'élément de guidage (82) est formé comme tourillon de guidage avec une pièce de collier (821) et une pièce de tête (822), dans lequel la pièce de collier (821) est disposée parallèlement à l'axe de pivotement (83) de l'outil (8) au niveau de la poignée à levier (81) de l'outil (8).

3. Outil (8) selon la revendication 1 ou 2,
**caractérisé en ce que**
le tourillon d'actionnement (84) présente une pièce de collier (841) et une pièce de tête (842), dans lequel la pièce de tête (842) du tourillon d'actionnement (84) et l'ouverture d'outil (42) sont formées de telle manière que la pièce de tête (842) puisse être introduite dans l'ouverture d'outil (42) seulement dans l'orientation de l'ouverture d'outil (42), pour laquelle le verrou de fermeture (4) est dans la position de verrouillage.

4. Fixation de garniture de frein pour un véhicule ferroviaire et outil (8) pour le pivotement d'un verrou de fermeture (4), dans lesquels la fixation de garniture de frein présente un support de garniture (2) et une garniture de frein (7) maintenue de manière bloquée contre le support de garniture (2),
dans lesquels le support de garniture (2) présente une plaque de pression (21) avec un canal de guidage (22) s'étendant dans le sens longitudinal du support de garniture (2), canal dans lequel la garniture de frein (7) est maintenue de manière mobile,
dans lesquels le verrou de fermeture (4) est maintenu de manière pivotante au niveau du support de garniture (2) pour le blocage de la garniture de frein (7) dans le sens longitudinal du support de garniture (2), dans lesquels le verrou de fermeture (4) dépasse dans une position de verrouillage fixant la garniture de frein (7) dans une position fonctionnelle dans le canal de guidage (22) et est retiré du canal de guidage (22) dans une position de libération,
dans lesquels un étrier (5) est disposé au niveau d'une extrémité éloignée d'un axe de pivotement (44) du verrou de fermeture (4), étrier qui est logé de manière pivotante au niveau du support de garniture (2) et avec lequel le verrou de fermeture (4) peut être pivoté entre la position de verrouillage et la position de libération,
dans lesquels le verrou de fermeture (4) présente une ouverture d'outil (42) dans laquelle l'outil (8) peut être introduit pour le pivotement du verrou de fermeture (4),
**caractérisés en ce que**
l'outil (8) est formé selon l'une quelconque des revendications précédentes, dans lequel l'axe de pivotement (83) de l'outil (8) peut être inséré dans le support de garniture (2).

5. Fixation de garniture de frein et outil (8) selon la revendication 4,
**caractérisés en ce que**
l'étrier (5) est disposé sur un côté éloigné du canal de guidage (22) de la plaque de pression (21) de telle manière qu'une extrémité formée comme pièce de bocage (53) d'une seconde branche (52) de l'étrier (5) dépasse du verrou de fermeture (4) en direction d'une extrémité de support de garniture et une extrémité libre d'une première branche (51) soit reçue dans un perçage d'un palier (25) du support de garniture (2) alors que les parties restantes de la première branche (51), de la seconde branche (52) et une pièce de liaison reliant celles-ci entre elles sont disposées sur un côté tourné vers un levier de frein (3) du verrou de fermeture (4).

6. Fixation de garniture de frein et outil (8) selon la revendication 4 ou 5, **caractérisés en ce que**
l'extrémité du verrou de fermeture (4) éloignée de l'axe de pivotement (44) du verrou de fermeture (4) est reçue dans la position de verrouillage dans une fente (27) d'un palier (25) du support de garniture (2).

7. Fixation de garniture de frein et outil (8) selon l'une quelconque des revendications 4 à 6,
**caractérisés en ce que**
le contour (28), le long duquel l'élément de guidage (82) peut être guidé, est formé au niveau d'un côté éloigné de la plaque de pression (21) du palier (25).

8. Fixation de garniture de frein et outil (8) selon la revendication 4, dans lesquels l'outil (8) est formé selon la revendication 2,
**caractérisés en ce que**
la pièce de tête (822) de l'élément de guidage (82) dépasse après le pivotement du verrou de fermeture (4) de la position de verrouillage en direction de la position de libération dans la fente (27) du palier (25) du support de garniture (2).
